# EUROPEAN PATENT APPLICATION

(11) **EP 2 587 031 A1**
(43) Date of publication of application: **01.05.2013**
(21) Application number: 11867316.9
(22) Date of filing: 09.06.2011
(51) Int. Cl.: F02D 29/02, F02D 17/00

(54) **ENGINE CONTROL DEVICE**

(71) Applicant: TOYOTA JIDOSHA KABUSHIKI KAISHA, Aichi-ken, 471-8571 (JP)
(72) Inventor: YAMAMOTO Kazuhiro, Toyota-shi Aichi-ken 471-8571 (JP); MORISE Masaru, Toyota-shi Aichi-ken 471-8571 (JP); WATANABE Hideo, Toyota-shi Aichi-ken 471-8571 (JP); OKUBO Tadanao, Toyota-shi Aichi-ken 471-8571 (JP)
(74) Representative: Albutt, Anthony John
(86) International application number: PCT/JP2011/063218
(87) International publication number: WO 2012/169034

(57) **Abstract**

An engine control device (ECU 8) includes an operation determination unit (81) that determines whether a "stop instruction operation", which is a pre-set operation for instructing the stopping of the engine (1), was performed while the vehicle is traveling, a first condition determination unit (83) that, if the operation determination unit (81) determined that the "stop instruction operation" was performed, determines whether a pre-set "first stop condition", which is a condition for avoiding a decrease in the lifetime of the manual transmission (2), is satisfied, and a control execution unit (84) that executes the operation for stopping the engine (1) only if the first condition determination unit (83) determined that the "first stop condition" is satisfied. In this way, the operation for stopping the engine (1) is executed only if it was determined that the "first stop condition" is satisfied, thus making it possible to prevent a decrease in the lifetime of synchromesh mechanisms (24A, 24B, and 24C) and the like by setting the "first stop condition" to an appropriate condition.

## Description

### [Technical Field]

The present invention relates to an engine control device in a vehicle in which an engine, a manual transmission, and a clutch provided between the engine and the manual transmission are mounted, the clutch being configured so as to be able to switch between a disengaged state and an engaged state, and the engine control device controlling an operation for stopping the engine while the vehicle is traveling.

### [Background Art]

Conventionally, with a vehicle including a manual transmission (MT), technology has been proposed in which fuel consumption is improved by stopping the engine when the clutch is in a disengaged state and furthermore the shift position is at neutral (N), and starting the engine when the shift position has changed from neutral (N) to a travel position.

For example, an engine stop control device has been disclosed (see PTL 1) in which the engine is stopped when the clutch is in a disengaged state, the shift position is at a non-travel position, and the throttle opening degree is a substantially fully-closed opening degree, and prohibiting the stopping of the engine when the throttle opening degree is not a substantially fully-closed opening degree, even if the clutch is in a disengaged state, and the shift position is at a non-travel position. This engine stop control device enables smoothly performing a down-shift operation while making it possible to increase the engine speed according to the throttle opening degree.

### [Citation List]

### [Patent Literature]

[PTL 1] JP H11-257119A

### [Disclosure of Invention]

### [Technical Problems]

However, with the engine stop control device recited in PTL 1, gear engagement is performed while the vehicle speed is high, and thus there is the risk of a decrease in the lifetime of the synchromesh mechanism and the like. Specifically, with the engine stop control device recited in PTL 1, when the clutch is in the disengaged state, the shift position is at a non-travel position, and the throttle opening degree is a substantially fully-closed opening degree, the engine is stopped even if the vehicle speed is high.

Accordingly, the engine is subsequently started when the shift position has changed from neutral (N) to a travel position, and if the vehicle speed is high (the output shaft rotational speed of the manual transmission is high) when the clutch is subsequently put in the engaged state, the clutch will be engaged while there is a large difference between the input shaft rotational speed and the output shaft rotational speed of the manual transmission, and therefore there is the risk of a decrease in the lifetime of the synchromesh mechanism and the like.

The present invention was achieved in light of the aforementioned issues, and an object thereof is to provide an engine control device that can prevent a decrease in the lifetime of a synchromesh mechanism and the like.

### [Means for Solving the Problems]

In order to resolve the aforementioned issues, an engine control device according to the present invention is configured as described below.

Specifically, an engine control device according to the present invention is an engine control device in a vehicle in which an engine, a manual transmission, and a clutch provided between the engine and the manual transmission are mounted, the clutch being configured so as to be able to switch between a disengaged state and an engaged state, and the engine control device controlling an operation for stopping the engine while the vehicle is traveling, the engine control device including: an operation determination means for determining whether a stop instruction operation that is a pre-set operation for instructing stopping of the engine was performed while the vehicle is traveling; a first condition determination means for, if the operation determination means determined that the stop instruction operation was performed, determining whether a pre-set first stop condition that is a condition for avoiding a decrease in the lifetime of the manual transmission is satisfied; and a control execution means for executing the operation for stopping the engine only if the first condition determination means determined that the first stop condition is satisfied.

According to the engine control device having this configuration, it is determined whether a pre-set stop instruction operation, which is an operation for instructing the stopping of the engine, was performed while the vehicle is traveling. Then, if it was determined that the stop instruction operation was performed, it is determined whether the pre-set first stop condition, which is a condition for avoiding a decrease in the lifetime of the manual transmission, is satisfied. Furthermore, since the operation for stopping the engine is executed only if it was determined by the first condition determination means that the first stop condition is satisfied, a decrease in the lifetime of the synchromesh mechanism and the like can be prevented by setting the first stop condition to an appropriate condition.

Also, it is preferable that with the engine control device according to the present invention, the stop instruction operation includes at least an operation for setting a gear stage of the manual transmission to neutral.

According to the engine control device having this configuration, the stop instruction operation includes at least the operation for setting the gear stage of the manual transmission to neutral, and therefore the engine is stopped while the gear stage is at neutral, thus making it possible to stop the engine without influencing the traveling state of the vehicle.

Also, it is preferable that with the engine control device according to the present invention, the stop instruction operation is an operation involving sequential performance of an operation for putting the clutch in the disengaged state, an operation for setting the gear stage of the manual transmission to neutral, and an operation for putting the clutch in the engaged state.

According to the engine control device having this configuration, the stop instruction operation is an operation involving the sequential performance of an operation for putting the clutch in the disengaged state, an operation for setting the gear stage of the manual transmission to neutral, and an operation for putting the clutch in the engaged state, and therefore the engine is stopped while the gear stage is at neutral and the clutch is engaged, thus making it possible to stop the engine in a favorable state without influencing the traveling state of the vehicle.

Furthermore, since the engine is stopped while the clutch is engaged, this state can be maintained (the state in which the engine is stopped can be continued) by simply continuing to maintain the state in which the foot is separated from the clutch pedal, thus alleviating the burden on the driver for driving operations.

Also, it is preferable that with the engine control device according to the present invention, the first stop condition is that a vehicle speed is less than a pre-set upper limit vehicle speed that corresponds to the gear stage that was established before the stop instruction operation was performed.

According to the engine control device having this configuration, the first stop condition is the condition that the vehicle speed is less than the pre-set upper limit vehicle speed that corresponds to the gear stage that was established before the stop instruction operation was performed, and therefore if the vehicle speed is greater than or equal to the upper limit vehicle speed, the operation for stopping the engine will not be executed, thus making it possible to reliably prevent a decrease in the lifetime of the synchromesh mechanism and the like by setting the upper limit vehicle speed to an appropriate value.

Also, it is preferable that with the engine control device according to the present invention, the first stop condition is a condition that an output shaft rotational speed of the manual transmission is less than a pre-set upper limit rotational speed.

According to the engine control device having this configuration, the first stop condition is the condition that the output shaft rotational speed of the manual transmission is less than the pre-set upper limit rotational speed, and therefore if the output shaft rotational speed of the manual transmission is greater than or equal to the upper limit rotational speed, the operation for stopping the engine will not be executed, thus making it possible to reliably prevent a decrease in the lifetime of the synchromesh mechanism and the like by setting the upper limit rotational speed to an appropriate value.

Also, it is preferable that the engine control device according to the present invention further includes a first notification means for, if the first condition determination means determined that the first stop condition is not satisfied, notifying the outside that the operation for stopping the engine will not be executed since the first stop condition is not satisfied.

According to the engine control device having this configuration, if it was determined that the first stop condition is not satisfied, the outside is notified that the operation for stopping the engine will not be executed since the first stop condition is not satisfied, and therefore the driver can be aware that the reason why the operation for stopping the engine will not be executed even if the stop instruction operation is performed is that the first stop condition is not satisfied, thus making it possible to improve usability.

Also, it is preferable that the engine control device according to the present invention further includes: a second condition determination means for, if the operation determination means determined that the stop instruction operation has not been performed, determining whether a pre-set second stop condition that is a condition for avoiding a decrease in the lifetime of the manual transmission is satisfied; and a second notification means for notifying the outside of the determination result obtained by the second condition determination means.

According to the engine control device having this configuration, if it was determined that the stop instruction operation has not been performed, it is determined whether the pre-set second stop condition, which is a condition for avoiding a decrease in the lifetime of the manual transmission, is satisfied. Since the result of the determination is notified to the outside, the driver can be aware of whether the operation for stopping the engine can be executed by performing the stop instruction operation, thus making it possible to appropriately prevent the needless execution of the stop instruction operation.

Specifically, if it was determined that the second stop condition is not satisfied, even if the stop instruction operation is performed thereafter, that stop instruction operation will be a needless operation since it is determined that the first stop condition is not satisfied and the operation for stopping the engine will not be executed. Accordingly, the result of the determination of whether the second stop condition is satisfied is notified to the outside, and therefore the driver can be aware of whether the operation for stopping the engine can be executed by performing the stop instruction operation, thus making it possible to appropriately prevent the needless execution of the stop instruction operation.

Also, it is preferable that with the engine control device according to the present invention, the second stop condition is a condition that the vehicle speed is less than a pre-set upper limit vehicle speed that corresponds to the gear stage established when the determination is made by the second condition determination.

According to the engine control device having this configuration, the second stop condition is the condition that the vehicle speed is less than the pre-set upper limit vehicle speed that corresponds to the gear stage that was established when the determination was executed by the second condition determination, and therefore it is possible to more appropriately prevent the needless execution of the stop instruction operation.

Specifically, since the second stop condition is the condition that the vehicle speed is less than the pre-set upper limit vehicle speed that corresponds to the gear stage that was established when the determination was executed by the second condition determination means, the result of this determination of whether the second stop condition is satisfied is approximately the same as the result of the determination of whether the first stop condition is satisfied. Accordingly, the result of the determination of whether the second stop condition is satisfied is notified to the outside, and therefore the driver can be aware of whether the operation for stopping the engine can be executed by performing the stop instruction operation, thus making it possible to more appropriately prevent the needless execution of the stop instruction operation.

Also, it is preferable that with the engine control device according to the present invention, the second stop condition is a condition that an output shaft rotational speed of the manual transmission is less than a pre-set upper limit rotational speed.

According to the engine control device having this configuration, the second stop condition is the condition that the output shaft rotational speed of the manual transmission is less than the pre-set upper limit rotational speed, and therefore if the output shaft rotational speed of the manual transmission is greater than or equal to the upper limit rotational speed, the operation for stopping the engine will not be executed, thus making it possible to reliably prevent a decrease in the lifetime of the synchromesh mechanism and the like by setting the upper limit rotational speed to an appropriate value.

Also, it is preferable that with the engine control device according to the present invention, if the second condition determination means determined that the second stop condition is not satisfied, the second notification means notifies the outside that the operation for stopping the engine will not be executed even if the stop instruction operation is performed.

According to the engine control device having this configuration, if it was determined that the second stop condition is not satisfied, the outside is notified that the operation for stopping the engine will not be executed even if the stop instruction operation is performed, thus making it possible for the driver to easily become aware that the operation for stopping the engine cannot be executed even if the stop instruction operation is performed, thus making it possible to further improve usability.

### [Effects of the Invention]

According to an engine control device of the present invention, it is determined whether a pre-set stop instruction operation, which is an operation for instructing the stopping of the engine, was performed while the vehicle is traveling. Then, if it was determined that the stop instruction operation was performed, it is determined whether a pre-set first stop condition, which is a condition for avoiding a decrease in the lifetime of the manual transmission, is satisfied. Furthermore, since an operation for stopping the engine is executed only if it was determined by the first condition determination means that the first stop condition is satisfied, a decrease in the lifetime of the synchromesh mechanism and the like can be prevented by setting the first stop condition to an appropriate condition.

### [Brief Description of Drawings]

[FIG. 1]

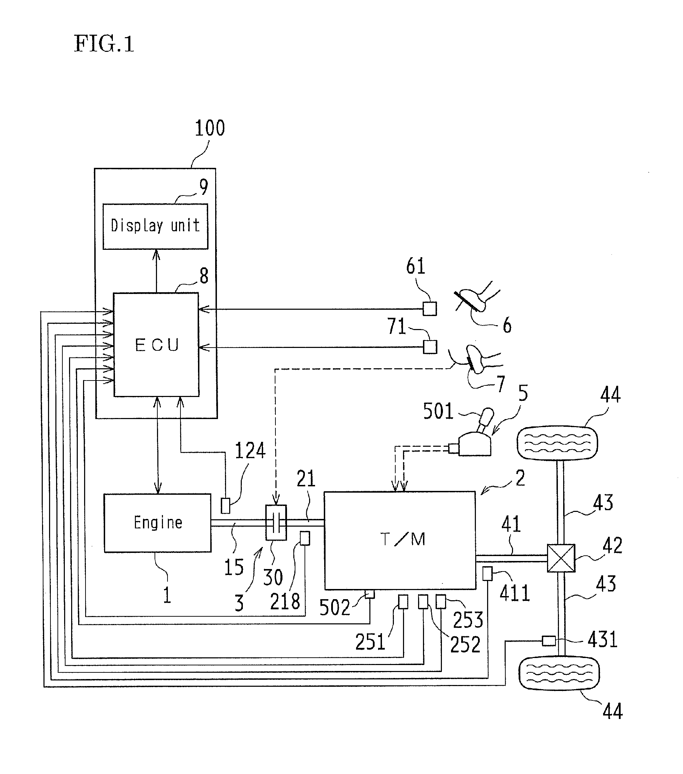

   FIG. 1 is a configuration diagram showing an example of a power train and a control system therefor in a vehicle in which an engine control device according to the present invention is mounted.
[FIG. 2]

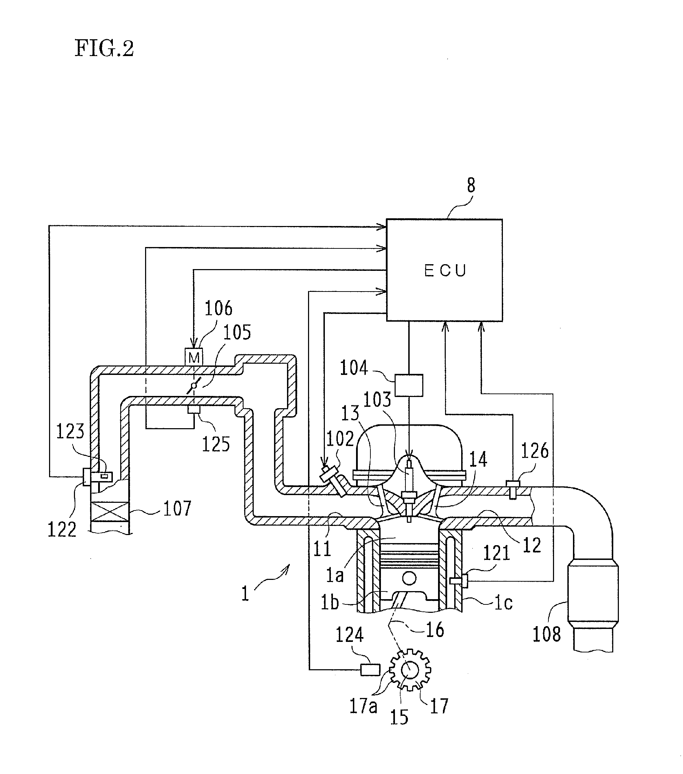

   FIG. 2 is a configuration diagram showing an example of an engine mounted in the vehicle shown in FIG. 1.
[FIG. 3]

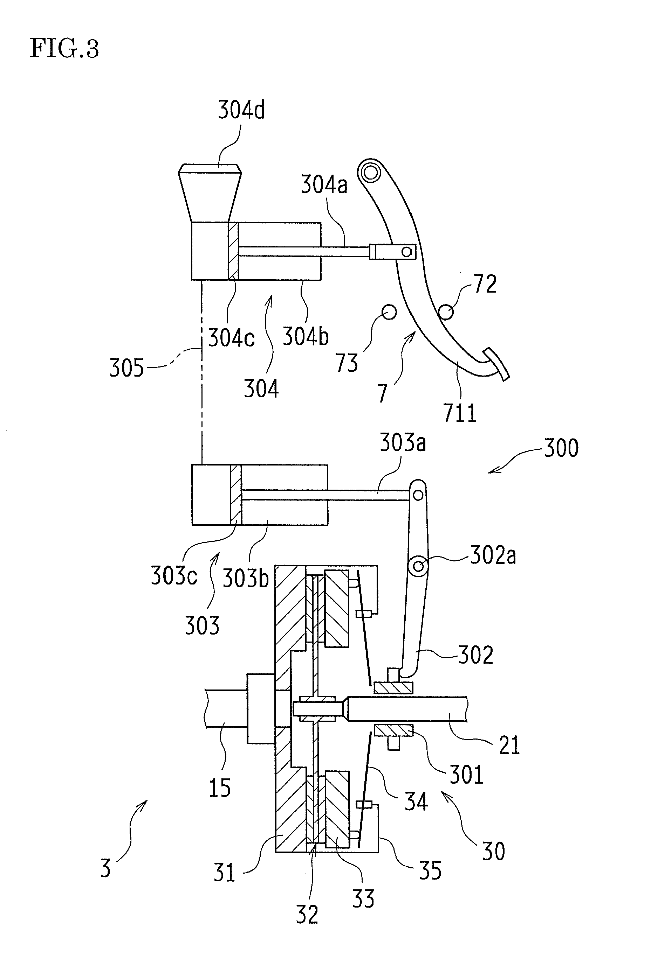

   FIG. 3 is a configuration diagram showing an example of a clutch mounted in the vehicle shown in FIG. 1.
[FIG. 4]

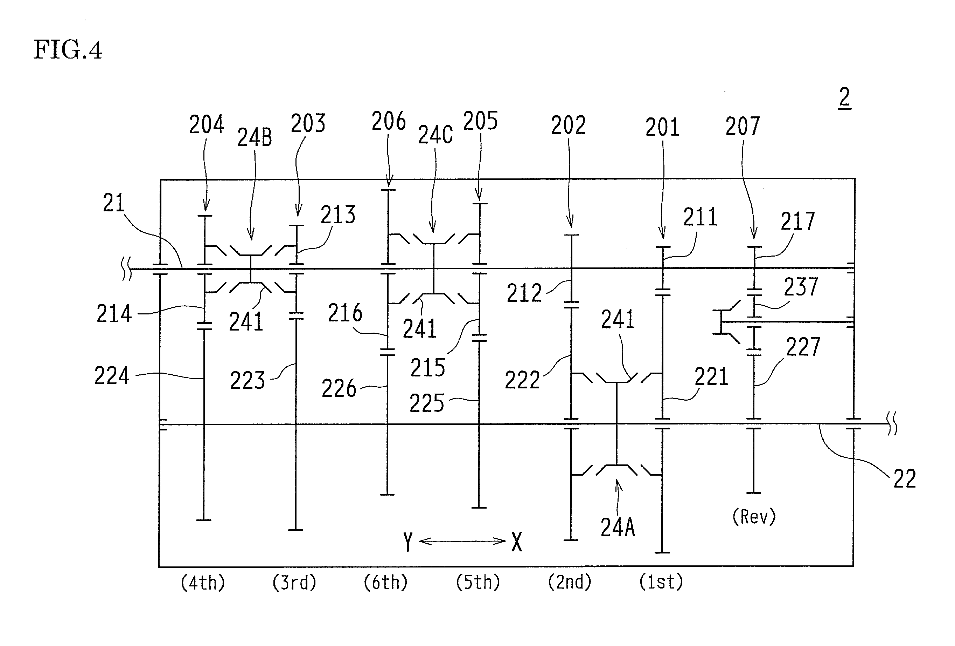

   FIG. 4 is a schematic diagram showing an example of a manual transmission mounted in the vehicle shown in FIG. 1.
[FIG. 5]

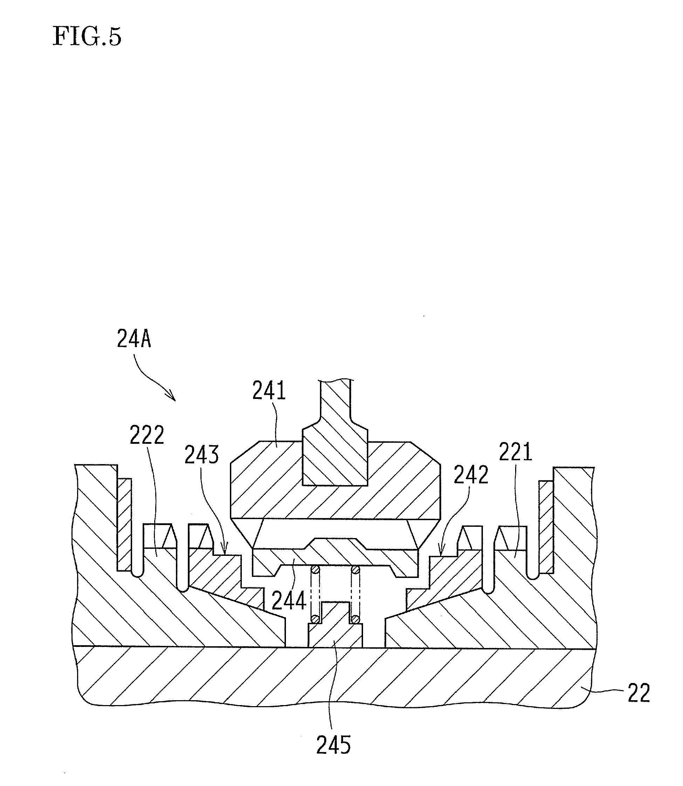

   FIG. 5 is a cross-sectional diagram showing an example of the upper half of a synchromesh mechanism shown in FIG. 4.
[FIG. 6]

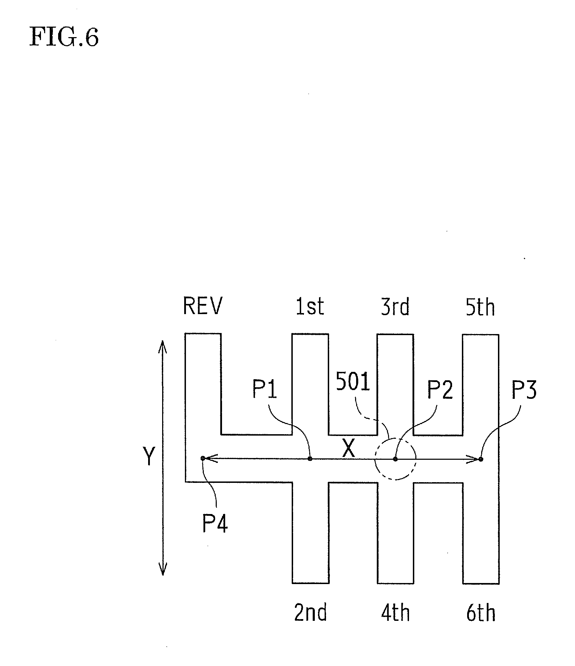

   FIG. 6 is a plan view of an example of a shift pattern (shift gate configuration) of a shift gate that guides the movement of a shift lever of a shift device shown in FIG. 1.
[FIG. 7]

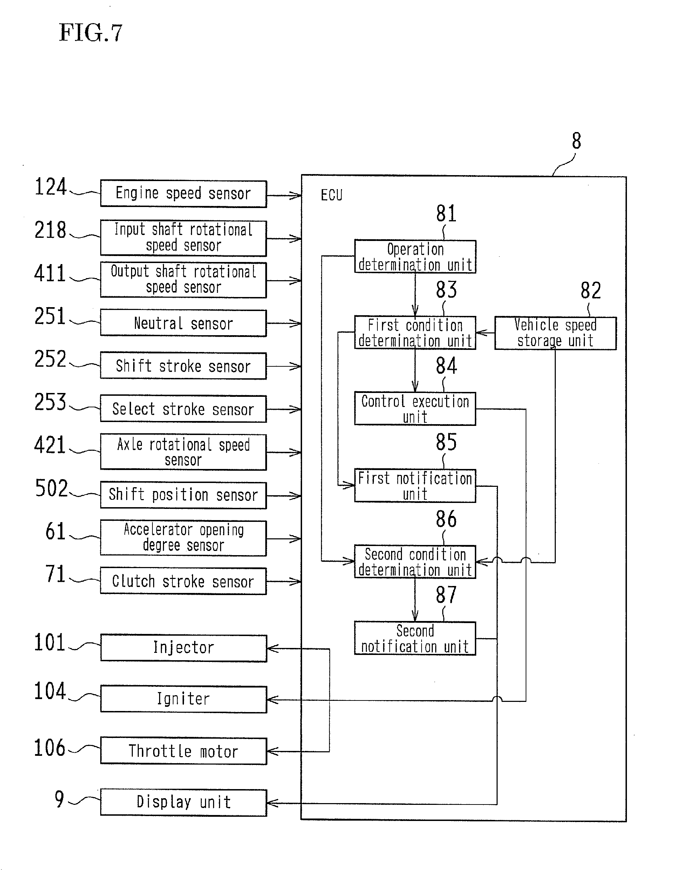

   FIG. 7 is a functional configuration diagram showing an example of the engine control device mounted in the vehicle shown in FIG. 1.
[FIG. 8]

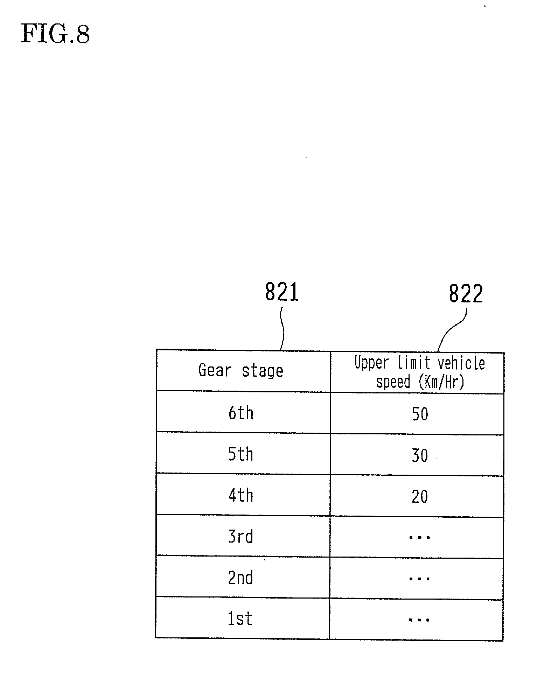

   FIG. 8 is a table showing an example of content stored in a vehicle speed storage unit shown in FIG. 7.
[FIG. 9]

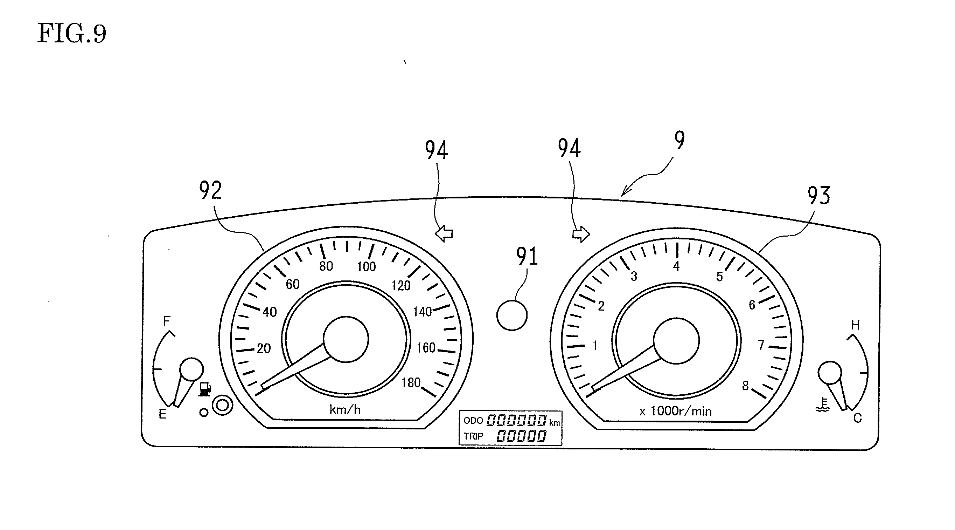

   FIG. 9 is a front view of an example of a display unit shown in FIG. 7.
[FIG. 10]

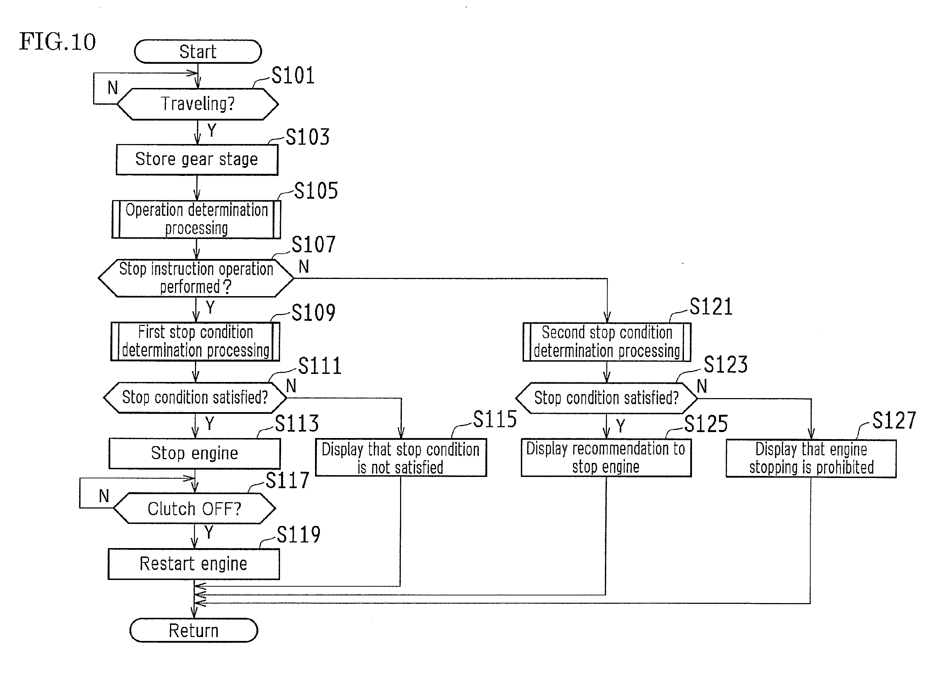

   FIG. 10 is a flowchart showing an example of operations performed by the engine control device shown in FIG. 7.
[FIG. 11]

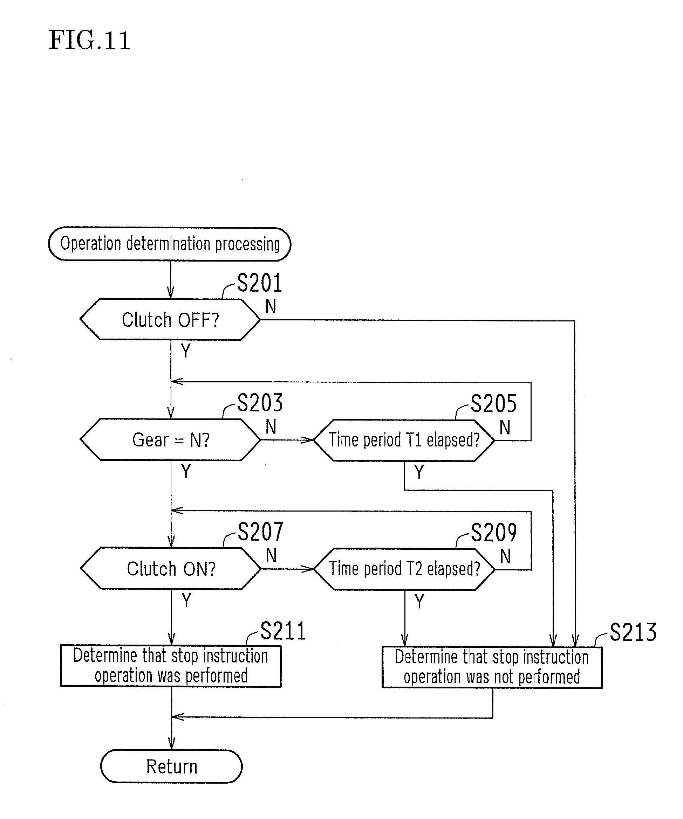

   FIG. 11 is a detailed flowchart showing an example of operation determination processing executed in step S105 of the flowchart shown in FIG. 10.
[FIG. 12]

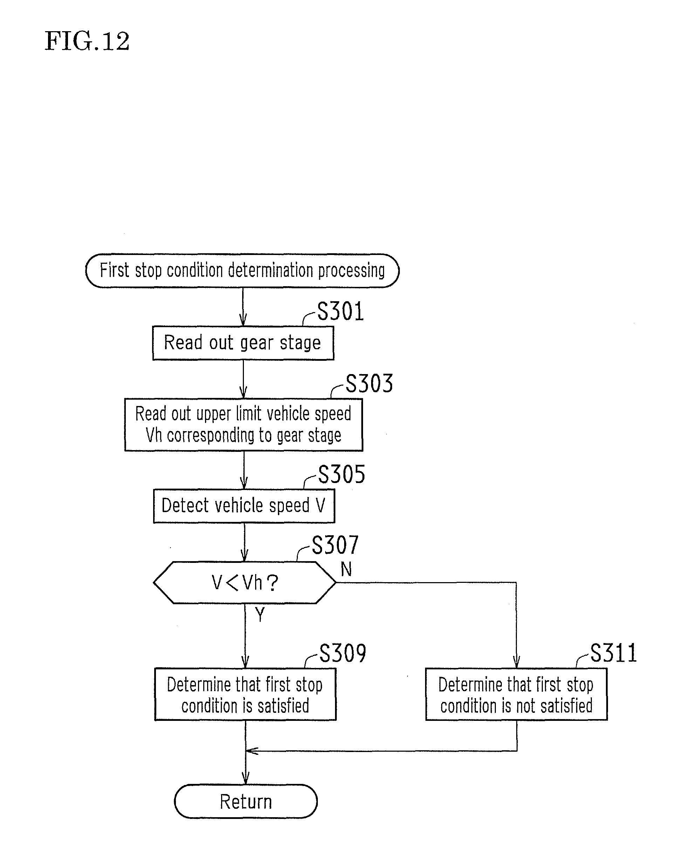

   FIG. 12 is a detailed flowchart showing an example of first stop condition determination processing executed in step S109 of the flowchart shown in FIG. 10.
[FIG. 13]

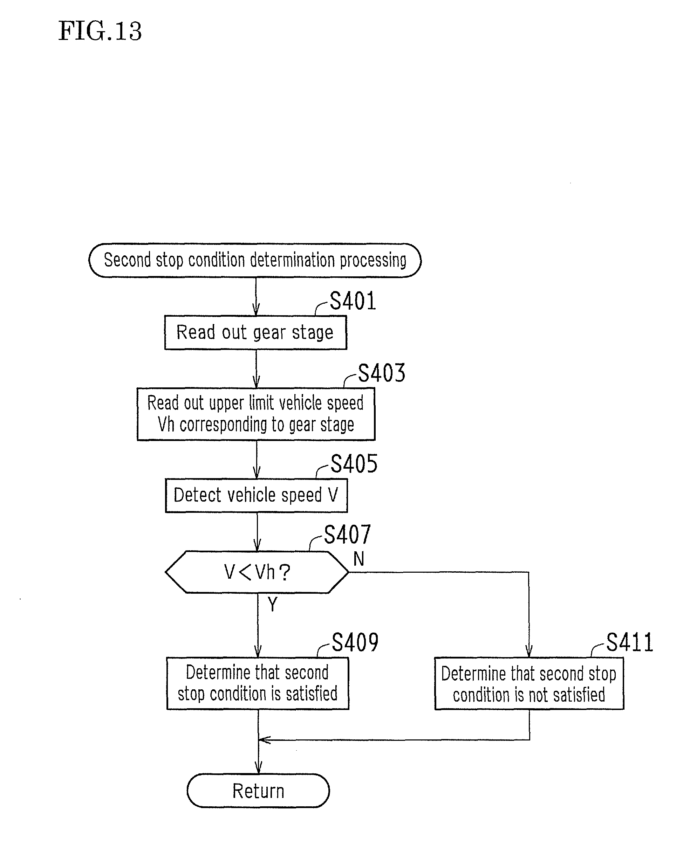

   FIG. 13 is a detailed flowchart showing an example of second stop condition determination processing executed in step S121 of the flowchart shown in FIG. 10.
[FIG. 14]

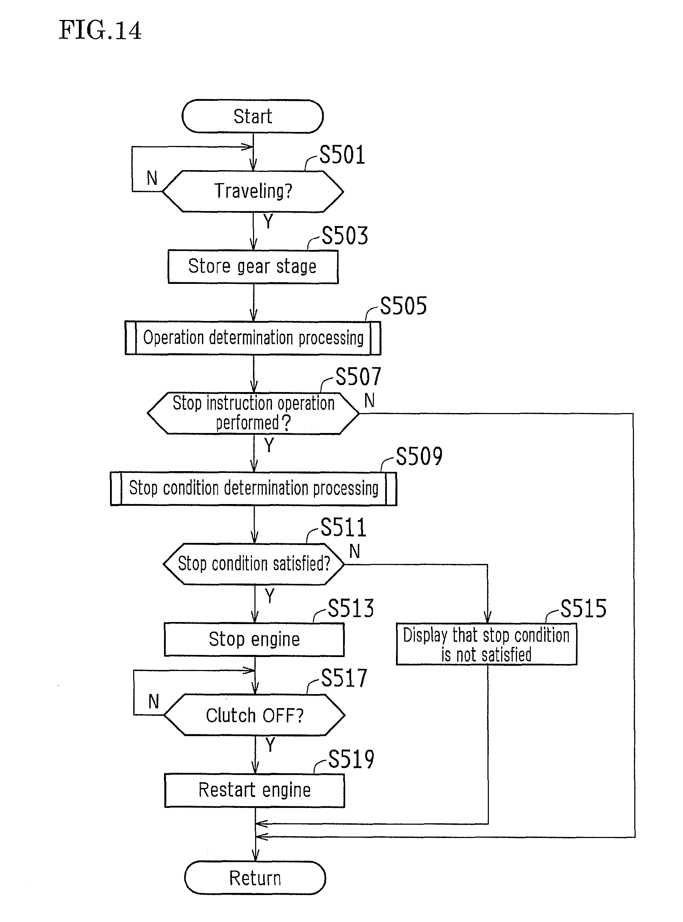

   FIG. 14 is a flowchart showing another example of operations performed by the engine control device shown in FIG. 7.

### [Mode for Carrying Out the Invention]

An embodiment of the present invention is described below with reference to the drawings.

FIG. 1 is a configuration diagram showing an example of a power train and a control system therefor in a vehicle in which an engine control device 100 according to the present invention is mounted. The vehicle of the present embodiment is an FR (front-engine, rear-wheel drive) vehicle that includes an engine 1, a manual transmission (MT) 2, a clutch 3, a hydraulic circuit 4, a shift device 5, an accelerator pedal 6, a clutch pedal 7, an electronic control unit (ECU) 8, a display unit 9, and the like. Note that the engine control device 100 of the present invention corresponds to the ECU 8 and the display unit 9.

As shown in FIG. 1, a crankshaft 15, which is the output shaft of the engine 1, is coupled to the clutch 3. Also, when the clutch 3 enters the engaged state, drive force (drive torque) from the engine 1 is transmitted to drive wheels 44 via the crankshaft 15, the clutch 3, an input shaft 21, the manual transmission 2, an output shaft 22 (see FIG. 4), a drive shaft 41, a differential gear mechanism 42, and an axle 43.

An engine speed sensor 124 that detects the rotational speed of the crankshaft 15 as an engine speed Ne is disposed in the vicinity of the crankshaft 15. Also, an input shaft rotational speed sensor 218 that detects the rotational speed of the input shaft 21 as an input shaft rotational speed Ni is disposed in the vicinity of the input shaft 21 of the manual transmission 2, and an output shaft rotational speed sensor 411 that detects the rotational speed of the output shaft 22 (or the drive shaft 41) as an output shaft rotational speed No is disposed in the vicinity of the output shaft 22 (or the drive shaft 41) of the manual transmission 2. Furthermore, an axle rotational speed sensor 431 that detects the rotational speed of the axle 43 as an axle rotational speed Nv is disposed in the vicinity of the axle 43. The engine rotational speed Ne detected by the engine speed sensor 124, the input shaft rotational speed Ni detected by the input shaft rotational speed sensor 218, the output shaft rotational speed No detected by the output shaft rotational speed sensor 411, and the axle rotational speed Nv detected by the axle rotational speed sensor 431 are output to the ECU 8.

A shift lever 501 is disposed in the shift device 5. The shift lever 501 is a lever that is gripped by a driver to perform an operation for changing the shift position. An accelerator opening degree sensor 61 that detects the accelerator opening degree is disposed on the accelerator pedal 6. Furthermore, a clutch stroke sensor 71 that detects the clutch stroke is disposed on the clutch pedal 7. The accelerator opening degree detected by the accelerator opening degree sensor 61 and the clutch stroke detected by the clutch stroke sensor 71 are output to the ECU 8 (see FIG. 7).

Also, the manual transmission 2 is provided with a shift position sensor 502 that detects the shift position, a neutral sensor 251 that detects that the shift position is the neutral (N) position, a shift stroke sensor 252 that detects the shift stroke, and a select stroke sensor 253 that detects the select stroke. The results detected by the shift position sensor 502, the neutral sensor 251, the shift stroke sensor 252, and the select stroke sensor 253 are output to the ECU 8 (see FIG. 7).

### - Engine 1 -

First, the engine 1 of the present embodiment will be described with reference to FIG. 2. FIG. 2 is a configuration diagram showing an example of the engine 1 mounted in the vehicle shown in FIG. 1. The engine 1 is a multi-cylinder gasoline engine, for example, and includes a piston 1b that forms a combustion chamber 1a, and the crankshaft 15 (see FIG. 1) that is the output shaft. The piston 1b is coupled to the crankshaft 15 via a connecting rod 16. Also, back-and-forth movement of the piston 1b is converted by the connecting rod 16 into rotational movement of the crankshaft 15.

A signal rotor 17 is disposed on the crankshaft 15. Multiple protrusions 17a are formed at equal intervals on the outer circumferential face of the signal rotor 17. The engine speed sensor 124 is disposed in the vicinity of the side of the signal rotor 17. The engine speed sensor 124 is an electromagnetic pickup, for example, and generates the same number of pulse-shaped signals (output pulses) as the number of protrusions 17a that pass a position opposing the engine speed sensor 124 when the crankshaft 15 rotates.

A spark plug 103 is disposed in the combustion chamber 1a of the engine 1. The ignition timing of the spark plug 103 is adjusted by an igniter 104. The igniter 104 is controlled by the ECU 8. A water temperature sensor 121 that detects the engine water temperature (coolant water temperature) is disposed in a cylinder block 1c of the engine 1.

An intake path 11 and an exhaust path 12 are connected to the combustion chamber 1a of the engine 1. An intake valve 13 is provided between the intake path 11 and the combustion chamber 1a. The intake path 11 and the combustion chamber 1a are put into communication or blocked by driving the intake valve 13 so as to open/close. Also, an exhaust valve 14 is provided between the exhaust path 12 and the combustion chamber 1a. The exhaust path 12 and the combustion chamber 1a are put into communication or blocked by driving the exhaust valve 14 so as to open/close.

An air cleaner 107, an air flow meter 122, an intake temperature sensor 123, a throttle valve 105, and the like are disposed in the intake path 11 of the engine 1. Here, the throttle valve 105 adjusts the intake air amount of the engine 1. Also, an O₂ sensor 126, a three-way catalyst 108, and the like are disposed in the exhaust path 12 of the engine 1. Here, the O₂ sensor 126 detects the oxygen concentration in the exhaust gas.

The throttle valve 105 disposed in the intake path 11 of the engine 1 is driven by a throttle motor 106. The opening degree (throttle opening degree) of the throttle valve 105 is detected by the throttle opening degree sensor 125. Also, the driving of the throttle motor 106 is controlled by the ECU 8.

Also, an injector (fuel injection valve) 102 is disposed in the intake path 11. Fuel (here, gasoline) is supplied from a fuel tank to the injector 102 by a fuel pump, and the fuel is injected in the intake path 11 by the injector 102. The injected fuel mixes with intake air to form an air-fuel mixture, which is introduced to the combustion chamber 1a of the engine 1. The air-fuel mixture (fuel + air) that was introduced to the combustion chamber 1a is ignited by the spark plug 103 so as to undergo combustion and explode. Due to the combustion and explosion of the air-fuel mixture in the combustion chamber 1a, the piston 1b moves back-and-forth in the vertical direction in the figure, and the crankshaft 15 is driven so as to rotate.

### - Clutch 3 -

Next, the configuration of the clutch 3 will be described with reference to FIG. 3. FIG. 3 is a cross-sectional diagram showing an example of the configuration of the clutch 3 mounted in the vehicle shown in FIG. 1. As shown in FIG. 5, the clutch 3 includes a friction clutch 30 (also simply referred to as the "clutch 30") and a clutch actuation mechanism 300 that actuates the clutch 30 in accordance with an operation of pressing the clutch pedal 7.

The clutch 30 is configured as a dry-type single plate type of friction clutch, and is provided so as to be between the crankshaft 15 and the input shaft 21 of the manual transmission 2. Note that a configuration other than a dry-type single plate type of configuration may be employed for the clutch 30.

The clutch 30 includes a flywheel 31, a clutch disc 32, a pressure plate 33, a diaphragm spring 34, and a clutch cover 35. The flywheel 31 and the clutch cover 35 are attached to the crankshaft 15, which is the input shaft of the clutch 30, so as to rotate integrally therewith. The clutch disc 32 is spline-fitted to the input shaft 21 of the manual transmission 2, which is the output shaft of the clutch 30. Accordingly, the clutch disc 32 can slide along the axial direction (left-right direction in FIG. 3) while rotating integrally with the input shaft 21. The pressure plate 33 is disposed between the clutch disc 32 and the clutch cover 35. The pressure plate 33 is biased toward the flywheel 31 by the outer circumferential portion of the diaphragm spring 34.

The clutch actuation mechanism 300 includes a release bearing 301, a release fork 302, a clutch release cylinder 303, a clutch master cylinder 304, and the like. The release bearing 301 is mounted to the input shaft 21 so as to be capable of sliding along the axial direction. The release fork 302 is pivotally supported by a shaft 302a in the vicinity of the release bearing 301, and one end portion (the lower end portion in FIG. 3) of the release fork 302 abuts against the release bearing 301. The other end portion (the upper end portion in FIG. 3) of the release fork 302 is coupled to one end portion (the right end portion in FIG. 3) of a rod 303a of the clutch release cylinder 303.

The clutch release cylinder 303 is configured such that a piston 303c and the like are integrated inside a cylinder body 303b. The other end portion (left end portion in FIG. 3) of the rod 303a is coupled to the piston 303c. The clutch release cylinder 303 is connected to the clutch master cylinder 304 via a hydraulic pipe 305.

Similarly to the clutch release cylinder 303, the clutch master cylinder 304 is also configured such that a piston 304c and the like are integrated inside a cylinder body 304b. One end portion (left end portion in FIG. 3) of a rod 304a is coupled to the piston 304c. The other end portion (right end portion in FIG. 3) of the rod 304a is connected to an intermediate portion of a pedal lever 711 of the clutch pedal 7. A reserve tank 304d that supplies clutch fluid (oil), which is a working fluid, into the cylinder body 304b is provided on an upper portion of the cylinder body 304b.

The clutch master cylinder 304 receives the operation force of an operation in which the driver presses the clutch pedal 7, thus moving the piston 304c in the cylinder body 304b so as to generate hydraulic pressure. The hydraulic pressure generated by the clutch master cylinder 304 is transmitted to the clutch release cylinder 303 by the oil in the hydraulic pipe 305.

With the clutch 3, the clutch 30 is engaged and disengaged by the release fork 302 being actuated in accordance with the hydraulic pressure in the clutch release cylinder 303. Specifically, when the amount that the clutch pedal 7 is pressed increases from the state shown in FIG. 3 (clutch engaged state), oil is supplied from the clutch master cylinder 304 to the clutch release cylinder 303, and the hydraulic pressure in the clutch release cylinder 303 increases. Then, the piston 303c and the rod 303a are moved in the rightward direction in FIG. 3, the release fork 302 is rotated about the shaft 302a (rotated in the clockwise direction in FIG. 3), and the release bearing 301 is pressed toward the flywheel 31. Then, due to movement of the release bearing 301 in the same direction, the central portion of the diaphragm spring 34 elastically deforms in the same direction. Accordingly, the biasing force of the diaphragm spring 34 on the pressure plate 33 becomes weaker. For this reason, a semi-clutch state is entered in which the pressure plate 33, the clutch disc 32, and the flywheel 31 are engaged while sliding.

If the release bearing 301 moves farther toward the flywheel 31 in this semi-clutch state, and the biasing force of the diaphragm spring 34 on the pressure plate 33 becomes even weaker, the pressure plate 33, the clutch disc 32, and the flywheel 31 become separated from each other, and the clutch 30 enters a released (disengaged) state (clutch disengaged state). The transmission of torque from the engine 1 to the manual transmission 2 is blocked in this clutch disengaged state.

On the other hand, if the pressing of the clutch pedal 7 is let up such that the amount that the clutch pedal 7 is pressed decreases in the clutch disengaged state, oil is returned from the clutch release cylinder 303 to the clutch master cylinder 304, and the hydraulic pressure in the clutch release cylinder 303 decreases. Then, the piston 303c and the rod 303a are moved in the leftward direction in FIG. 3, the release fork 302 is rotated about the shaft 302a (rotated in the counter-clockwise direction in FIG. 3), and the release bearing 301 is moved so as to separate from the flywheel 31. Accordingly, the biasing force of the outer circumferential portion of the diaphragm spring 34 on the pressure plate 33 increases. For this reason, frictional force increases between the pressure plate 33 and the clutch disc 32, and also between the clutch disc 32 and the flywheel 31, and the clutch 30 enters the connected (engaged) state (clutch engaged state) due to such frictional force. In the clutch engaged state, the pressure plate 33, the clutch disc 32, and the flywheel 31 rotate integrally. The crankshaft 15 and the input shaft 21 then rotate integrally, and torque is transmitted between the engine 1 and the manual transmission 2.

Note that an upper pedal switch 72 and a lower pedal switch 73 are disposed so as to be adjacent to the pedal lever 711 of the clutch pedal 7. The upper pedal switch 72 and the lower pedal switch 73 detect that the amount that the clutch pedal 7 is pressed by the driver has reached predetermined amounts. Specifically, the upper pedal switch 72 is a switch that outputs an ON signal if the clutch pedal 7 has been let up to a position at which the clutch 30 enters the engaged state. The lower pedal switch 73 is a switch that outputs an ON signal if the clutch pedal 7 has been pressed to a position at which the clutch 30 enters the disengaged state.

### - Manual transmission 2 -

The manual transmission 2 shown in FIG. 1 is a known synchromesh type of manual transmission (e.g., six forward gears and one reverse gear), for example. Also, as shown in FIG. 1, if the input shaft 21 is connected to the crankshaft 15 of the engine 1 via the clutch 3, and the clutch 3 is in the engaged state, drive force (drive torque) from the engine 1 is converted by the manual transmission 2 according to a predetermined gear ratio and transmitted to the output shaft (drive shaft) 22.

Also, the manual transmission 2 operates so as to form the gear range that corresponds to the shift position that was selected by an operation performed on the shift lever 501 of the shift device 5 shown in FIG. 1. Note that the shift position that was selected by the shift lever 501 is detected by the shift position sensor 502.

FIG. 4 is a schematic diagram showing an example of the manual transmission 2 mounted in the vehicle shown in FIG. 1. As shown in FIG. 4, the manual transmission 2 includes the input shaft 21, the output shaft 22, six forward gear stages 201 to 206 that have different deceleration ratios, one reverse gear stage 207, a 1-2 shift synchromesh mechanism 24A, a 3-4 shift synchromesh mechanism 24B, a 5-6 shift synchromesh mechanism 24C, and the like.

The input shaft 21 is coupled to the crankshaft 15 of the engine 1 via the clutch 3. The output shaft 22 is coupled to the drive shaft 41 (see FIG. 1). Also, the gear stage of the transmission 2 can be determined based on the ratio of the rotational speeds obtained from the output signals from the input shaft rotational speed sensor 218 and the output shaft rotational speed sensor 411 shown in FIG. 1 (output shaft rotational speed No / input shaft rotational speed Ni).

The forward gear stages 201 to 206 are configured by combinations of drive gears 211 to 216 externally mounted on the input shaft 21 side and driven gears 221 to 226 that are externally mounted on the output shaft 22 side. The drive gears 211 to 216 and the driven gears 221 to 226 are meshed with each other.

The 1st speed and 2nd speed drive gears 211 and 212 are attached so as to rotate integrally with the input shaft 21, whereas the 3rd speed to 6th speed drive gears 213 to 216 are attached to the input shaft 21 via bearings (e.g., cage rollers) so as to be capable of relative rotation. Also, the 1st speed and 2nd speed driven gears 221 and 222 are attached to the output shaft 22 via bearings (e.g., cage rollers) so as to be capable of relative rotation, whereas the 3rd speed to 6th speed driven gears 223 to 226 are attached so as to rotate integrally with the output shaft 22. The reverse gear stage 207 includes a reverse drive gear 217, a reverse driven gear 227, a reverse idler gear 237, and the like.

The three synchromesh mechanisms 24A, 24B, and 24C have substantially the same configuration, which is a known configuration, and therefore will be briefly described with reference to FIG. 5. FIG. 5 is a cross-sectional diagram showing an example of the upper half of the synchromesh mechanism 24A shown in FIG. 4. FIG. 5 shows the 1-2 shift synchromesh mechanism 24A for the sake of convenience, and the following describes the 1-2 shift synchromesh mechanism 24A with reference to FIG. 5.

The 1-2 shift synchromesh mechanism 24A includes a sleeve 241, two synchronizer rings 242 and 243, a shifting key 244, a clutch hub 245, and the like.

The clutch hub 245 is fitted to the output shaft 22 of the transmission 2 by splines (not shown) and rotates integrally with the output shaft 22. The sleeve 241 is fitted to the outer circumference of the clutch hub 245 by inner circumferential splines (not shown) and is moved in the shift direction (X direction or Y direction).

When the first synchronizer ring 242 is pressed by the sleeve 241 in the X direction for example, the cone face of the first synchronizer ring 242 abuts against the cone face of the driven gear 221 of the forward 1st speed gear stage 201 that is idling on the output shaft 22 at a rotational speed that is synchronized with the input shaft 21.

When the second synchronizer ring 243 is pressed by the sleeve 241 in the Y direction for example, the cone face of the second synchronizer ring 243 abuts against the cone face of the driven gear 222 of the forward 2nd speed gear stage 202 that is idling on the output shaft 22 at a rotational speed that is synchronized with the input shaft 21.

Outer circumferential splines for meshing with the inner circumferential splines of the sleeve 241 are formed on the outer circumference of the two synchronizer rings 242 and 243. The shifting key 244 is fitted to the inner circumferential splines of the sleeve 241, and presses the end face of the first synchronizer ring 242 in the X direction upon initially moving in the X direction, for example.

Although the operation of the 1-2 shift synchromesh mechanism 24A is well-known, when the sleeve 241 is at the position shown in FIG. 5, the transmission 2 enters the neutral state, and when the sleeve 241 is moved in the X direction in FIG. 5 and the inner circumferential splines of the sleeve 241 are meshed with the driven gear 221 of the forward 1st speed gear stage 201 by the rotation/synchronization action of the first synchronizer ring 242, power is transmitted from the input shaft 21 to the output shaft 22 via the forward 1st speed gear stage 201. When the sleeve 241 is moved in the Y direction in FIG. 5 in this state, and the inner circumferential splines of the sleeve 241 separate from the driven gear 221 of the forward 1st speed gear stage 201 and return to the position shown in FIG. 5, the forward 1st speed gear stage 201 is returned to the neutral state of idling.

The following describes the shift pattern (shift gate configuration) of the shift gate that is disposed on the floor in the vehicle compartment and guides the movement of the shift lever 501 of the shift device 5. FIG. 6 is a plan view of an example of the shift pattern (shift gate configuration) of the shift gate that guides the movement of the shift lever 501 of the shift device 5 shown in FIG. 1. FIG. 6 shows an overview of the shift pattern of the manual transmission 2 that has six forward gear stages and one reverse gear stage. In this embodiment, the shift lever 501 is configured so as to enable the execution of a selection operation in the direction shown in FIG. 6 and a shift operation in the direction shown by arrow Y that is orthogonal to the selection operation direction.

A 1st-2nd speed select position P1, a 3rd-4th speed select position P2, a 5th-6th speed select position P3, and a reverse select position P4 are arranged in a line in the selection operation direction shown by an arrow X. The shift lever 501 can be moved to the 1st speed position 1st or the 2nd speed position 2nd by a shift operation (operation in the arrow Y direction) at the 1st-2nd speed select position P1. If the shift lever 501 is operated to the 1st speed position 1st, the sleeve 241 of the 1-2 shift synchromesh mechanism 24A of the manual transmission 2 is actuated toward the 1st speed establishment side (the right side in FIG. 4), and thus the 1st speed stage is established. Also, if the shift lever 501 is operated to the 2nd speed position 2nd, the sleeve 241 of the 1-2 shift synchromesh mechanism 24A is actuated toward the 2nd speed establishment side (left side in FIG. 4), and thus the 2nd speed stage is established.

Similarly, the shift lever 501 can be moved to the 3rd speed position 3rd or the 4th speed position 4th by a shift operation at the 3rd-4th speed select position P2. If the shift lever 501 is operated to the 3rd speed position 3rd, the sleeve 241 of the 3-4 shift synchromesh mechanism 24B of the manual transmission 2 is actuated toward the 3rd speed establishment side (the right side in FIG. 4), and thus the 3rd speed stage is established. Also, if the shift lever 501 is operated to the 4th speed position 4th, the sleeve 241 of the 3-4 shift synchromesh mechanism 24B is actuated toward the 4th speed establishment side (left side in FIG. 4), and thus the 4th speed stage is established.

Also, the shift lever 501 can be moved to the 5th speed position 5th or the 6th speed position 6th by a shift operation at the 5th-6th speed select position P3. If the shift lever 501 is operated to the 5th speed position 5th, the sleeve 241 of the 5-6 shift synchromesh mechanism 24C of the manual transmission 2 is actuated toward the 5th speed establishment side (the right side in FIG. 4), and thus the 5th speed stage is established. Also, if the shift lever 501 is operated to the 6th speed position 6th, the sleeve 241 of the 5-6 shift synchromesh mechanism 24C is actuated toward the 6th speed establishment side (left side in FIG. 4), and thus the 6th speed stage is established.

Furthermore, the shift lever 501 can be moved to the reverse position REV by a shift operation performed at the reverse select position P4. If the shift lever 501 is operated to the reverse position REV, the synchromesh mechanisms 24A, 24B, and 24C of the manual transmission 2 each enter the neutral state, and the reverse idler gear 237 of the manual transmission 2 is actuated, thus establishing the reverse stage.

Also, in this embodiment, the 3rd-4th speed select position P2 is the neutral position. If the shift lever 501 is operated to the neutral position P2, the synchromesh mechanisms 24A, 24B, and 24C of the manual transmission 2 each enter the neutral state, and a neutral state is entered in which the manual transmission 2 does not perform the transmission of torque between the input shaft 21 and the output shaft 22.

### - Configuration of engine control device 100 (ECU 8) -

Next, the configuration of the ECU 8 will be described with reference to FIG. 7. FIG. 7 is a functional configuration diagram showing an example of the engine control device 100 (ECU 8) mounted in the vehicle shown in FIG. 1. The ECU 8 includes a central processing unit (CPU), a read only memory (ROM), a random access memory (RAM), a backup RAM, and the like.

The ROM stores various types of control programs and the like. The CPU reads out the various types of control program stored in the ROM and executes various types of processing. The RAM is a memory that temporarily stores computation results and the like obtained by the CPU, and the backup RAM is a non-volatile memory that stores data and the like that is to be saved when the engine 1 is stopped.

Also, the ECU 8 is communicably connected to the engine speed sensor 124, the input shaft rotational speed sensor 218, the output shaft rotational speed sensor 411, the axle rotational speed sensor 431, the neutral sensor 251, the shift stroke sensor 252, the select stroke sensor 253, the shift position sensor 502, the accelerator opening degree sensor 61, the clutch stroke sensor 71 (see FIG. 1), and the like.

The ECU 8 is furthermore communicably connected to the injector 102, the igniter 104 of the spark plug 103, the throttle motor 106 of the throttle valve 105, and the like as control targets. The ECU 8 executes various types of control on the engine 1 based on output from the various types of sensors described above, including control of the injection of fuel from the injector 102, control of the ignition timing of the spark plug 103, drive control of the throttle motor 106, and the like.

Next, the functional configuration of the ECU 8 of the present invention will be described with reference to FIG. 7. The ECU 8 functions as an operation determination unit 81, a vehicle speed storage unit 82, a first condition determination unit 83, a control execution unit 84, a first notification unit 85, a second condition determination unit 86, and a second notification unit 87 by reading out control programs stored in the ROM and executing them. Here, the operation determination unit 81, the vehicle speed storage unit 82, the first condition determination unit 83, the control execution unit 84, the first notification unit 85, the second condition determination unit 86, and the second notification unit 87 correspond to part of the engine control device 100 of the present invention.

The operation determination unit 81 is a functional unit that determines whether a "stop instruction operation", which is a pre-set operation for instructing the stopping of the engine 1, was performed while the vehicle is traveling. Here, the operation determination unit 81 corresponds to the operation determination means recited in the claims. Specifically, the "stop instruction operation" includes at least an operation for setting the gear stage of the manual transmission 2 to neutral (N). More specifically, the "stop instruction operation" is, for example, the following three operations (first operation, second operation, and third operation) performed in sequence in a predetermined time period.

First operation: operation for putting the clutch 3 in the disengaged state (OFF)
Second operation: operation for setting the gear stage of the manual transmission 2 to neutral (N)
Third operation: operation for putting the clutch 3 in the engaged state (ON)
Here, in order to determine that the "stop instruction operation" was performed, it is necessary for, for example, the time period from when the first operation is completed until when the second operation is started to be less than or equal to a pre-set first time period (e.g., 5 sec), and for the time period from when the second operation is completed until when the third operation is started to be less than or equal to a pre-set second time period (e.g., 5 sec). Note that the determination of whether the "stop instruction operation" was performed can be made appropriately by setting the first time period and the second time period to appropriate values.

Since the "stop instruction operation" includes at least an operation for setting the gear stage of the manual transmission 2 to neutral (N) (here, the second operation) in this way, the engine 1 is stopped while the gear stage is at neutral (N), and therefore the engine 1 can be stopped without influencing the traveling state of the vehicle.

Also, the "stop instruction operation" is an operation involving the sequential performance of an operation for putting the clutch 3 in the disengaged state (here, the first operation), an operation for setting the gear stage of the manual transmission 2 to neutral (N) (here, the second operation), and an operation for putting the clutch 3 in the engaged state (here, the third operation), and therefore the engine 1 is stopped while the gear stage is at neutral (N) and the clutch 3 is engaged, thus making it possible to stop the engine 1 in a favorable state without influencing the traveling state of the vehicle.

In other words, since the engine 1 is stopped while the clutch 3 is engaged, this state can be maintained (the state in which the engine 1 is stopped can be continued) by simply continuing to maintain the state in which the foot is separated from the clutch pedal 7, thus alleviating the burden on the driver for driving operations.

Although the case where the "stop instruction operation" is the sequential performance of the three operations described above (first operation, second operation, and third operation) in a predetermined time period is described in the present embodiment, the "stop instruction operation" the "stop instruction operation" needs only be a mode including at least an operation for setting the gear stage of the manual transmission 2 to neutral (N) (here, the second operation). For example, in the case where the clutch 3 is a so-called automatic clutch, it is preferable that the "stop instruction operation" is an operation for setting the gear stage of the manual transmission 2 to neutral (N) (here, the second operation).

The vehicle speed storage unit 82 is a functional unit that stores a pre-set upper limit vehicle speed Vh in association with each of the forward gear stages (here, 1st speed to 6th speed). Here, the vehicle speed storage unit 82 corresponds to part of the first condition determination means and part of the second condition determination means that are recited in the claims. Also, the vehicle speed storage unit 82 is formed in the ROM of the ECU 8, for example. Note that the upper limit vehicle speeds Vh stored in the vehicle speed storage unit 82 are read out by the first condition determination unit 83 and the second condition determination unit 86.

FIG. 8 is a table showing an example of content stored in the vehicle speed storage unit 82 shown in FIG. 7. A left-side column 821 indicates the forward gear stages, and a right-side column 822 indicates the upper limit vehicle speeds Vh. For example, 50 km/Hr is stored as the upper limit vehicle speed Vh in association with "6th", and 30 km/Hr is stored as the upper limit vehicle speed Vh in association with "5th". In this way, the higher the gear ratio, the lower the upper limit vehicle speed Vh stored in the vehicle speed storage unit 82.

Returning to FIG. 7, the following describes the functional configuration of the ECU 8. The first condition determination unit 83 is a functional unit that, if the operation determination unit 81 determined that the "stop instruction operation" was performed, determines whether a pre-set "first stop condition", which is a condition for avoiding a decrease in the lifetime of the manual transmission 2, is satisfied. Here, the first condition determination unit 83 corresponds to part of the first condition determination means recited in the claims.

Specifically, the "first stop condition" is, for example, the condition that a vehicle speed V is less than the upper limit vehicle speed Vh that corresponds to the gear stage that was established before the second operation of the "stop instruction operation" was performed. Specifically, the first condition determination unit 83 reads out, from the vehicle speed storage unit 82, the upper limit vehicle speed Vh that corresponds to the gear stage that was established before the second operation of the "stop instruction operation" was performed, and determines whether the vehicle speed V is less than the upper limit vehicle speed Vh that was read out from the vehicle speed storage unit 82.

Since in this way the "first stop condition" is the condition that the vehicle speed V is less than the upper limit vehicle speed Vh that corresponds to the gear stage that was established before the second operation of the "stop instruction operation" was performed, if the vehicle speed V is greater than or equal to the upper limit vehicle speed Vh, the operation for stopping the engine 1 will not be executed, and therefore a decrease in the lifetime of the synchromesh mechanisms 24A, 24B, and 24C, and the like can be reliably prevented by setting the upper limit vehicle speeds Vh to appropriate values.

Note that since the "stop instruction operation" includes the operation for setting the gear stage of the manual transmission 2 to neutral (N) (here, the second operation), if the second operation of the "stop instruction operation" is performed, it is not possible to detect the gear stage that is to be used in the determination of whether the "first stop condition" is satisfied. Accordingly, the gear stage that was established before the second operation of the "stop instruction operation" was performed is detected and stored (see step S101 of FIG. 10), and in the case of determining whether the "first stop condition" is satisfied, the first condition determination unit 83 reads out the stored gear stage and determines whether the "first stop condition" is satisfied (see step S301 of FIG. 12).

Although the present embodiment describes the case where the "first stop condition" is the condition that the vehicle speed V is less than the upper limit vehicle speed Vh that corresponds to the gear stage that was established before the second operation of the "stop instruction operation" was performed, the "first stop condition" needs only be a condition for avoiding a decrease in the lifetime of the manual transmission 2. For example, a mode is possible in which the "first stop condition" is the condition that the output shaft rotational speed No of the manual transmission 2 is less than a pre-set upper limit rotational speed Nh. In this case, whether the "first stop condition" is satisfied can be determined through simple processing.

The control execution unit 84 is a functional unit that executes an operation for stopping the engine 1 only if the first condition determination unit 83 determined that the "first stop condition" is satisfied. Here, the control execution unit 84 corresponds to the control execution means recited in the claims. Specifically, the control execution unit 84 executes the operation for stopping the engine 1 if the first condition determination unit 83 determined that the "first stop condition" is satisfied, and prohibits the operation for stopping the engine 1 if the first condition determination unit 83 determined that the "first stop condition" is not satisfied.

Here, the operation for stopping the engine 1 is specifically performed by, for example, stopping the injection of fuel from the injector 102. Note that it is preferable that the operation for stopping the engine 1 is a mode in which in addition to stopping the injection of fuel from the injector 102, the ignition of the spark plug 103 via the igniter 104 is stopped.

Also, if the control execution unit 84 has executed the operation for stopping the engine 1, the control execution unit 84 restarts the engine 1 when a "restart condition", which is a pre-set condition for restarting the engine 1, is satisfied. Here, the "restart condition" is the condition that the clutch 3 has been put in the disengaged state (OFF), for example.

In other words, with the present embodiment, the engine 1 is stopped if the clutch 3 is put in the disengaged state, the gear stage of the manual transmission 2 is set to neutral (N), and the clutch 3 is then put in the engaged state, and furthermore the "first stop condition" is satisfied; and the engine 1 is then restarted when the clutch 3 is put in the disengaged state.

Since the engine 1 is restarted when the clutch 3 is put in the disengaged state, the engine 1 can be started in a no-load state, thus making it possible to smoothly start the engine 1, and making it possible to start the engine 1 without influencing the traveling state of the vehicle.

The first notification unit 85 is a functional unit that, if the first condition determination unit 83 determined that the "first stop condition" is not satisfied, notifies the outside that the operation for stopping the engine 1 will not be executed since the "first stop condition" is not satisfied. Here, the first notification unit 85 corresponds to the first notification means recited in the claims.

Specifically, the first notification unit 85 displays characters, a graphic, an image, or the like that indicates that the operation for stopping the engine 1 will not be executed in order to avoid a decrease in the lifetime of the manual transmission 2, for example. More specifically, the first notification unit 85 blinks an engine stop permission lamp 91 (see FIG. 9) provided in a combination meter 9 for a pre-set time period (e.g., 2 sec) so as to indicate that the operation for stopping the engine 1 will not be executed in order to avoid a decrease in the lifetime of the manual transmission 2. On the other hand, if the operation for stopping the engine 1 is to be executed, the first notification unit 85 indicates that fact by lighting the engine stop permission lamp 91 provided in the combination meter 9.

In this way, if it was determined that the "first stop condition" is not satisfied, the outside is notified that the operation for stopping the engine 1 will not be executed since the "first stop condition" is not satisfied, and therefore the driver can be aware that the reason why the operation for stopping the engine 1 will not be executed even if the "stop instruction operation" is performed is that the "first stop condition" is not satisfied, thus making it possible to improve usability.

Although the case where the first notification unit 85 blinks the engine stop permission lamp 91 when it was determined that the "first stop condition" is not satisfied is described in the present embodiment, a mode is possible in which if it was determined that the "first stop condition" is not satisfied, the first notification unit 85 outputs audio indicating that the operation for stopping the engine 1 will not be executed since the "first stop condition" is not satisfied (e.g., a pre-set warning sound or the audio phrase "The engine will not be stopped since conditions are not satisfied"), and a mode is possible in which characters, an image, or the like indicating that the operation for stopping the engine 1 will not be executed since the "first stop condition" is not satisfied is displayed.

The following describes operations of the engine stop permission lamp 91 with reference to FIG. 9. FIG. 9 is a front view of an example of the display unit (combination meter) 9 shown in FIG. 7. Note that the combination meter 9 is disposed at the front of the vehicle in a position where it can be viewed by the driver. As shown in FIG. 9, the combination meter 9 includes the engine stop permission lamp 91, a speedometer 92, a tachometer 93, direction indication lamps 94, various types of warning lamps, and the like.

The engine stop permission lamp 91 is disposed between the speedometer 92 and the tachometer 93, and indicates to the driver whether the "first stop condition" (or the "second stop condition") has been satisfied based on an instruction from the ECU 8 (here, the first notification unit 85 or the second notification unit 87 shown in FIG. 7).

Also, the engine stop permission lamp 91 is, for example, a substantially circular lamp constituted by a green light emitting diode (LED) or the like, which is lit if the "first stop condition" (or the "second stop condition") has been satisfied, and is blinked for a pre-set time period (e.g., 2 sec) if the "first stop condition" has not been satisfied. On the other hand, the engine stop permission lamp 91 is extinguished if the "second stop condition" has not been satisfied.

Returning to FIG. 7, the following describes the functional configuration of the ECU 8. The second condition determination unit 86 is a functional unit that, if the operation determination unit 81 determined that the "stop instruction operation" has not been performed, determines whether a pre-set "second stop condition", which is a condition for avoiding a decrease in the lifetime of the manual transmission 2, is satisfied. Here, the second condition determination unit 86 corresponds to part of the second condition determination means recited in the claims.

Specifically, the "second stop condition" is the condition that, for example, the vehicle speed V is less than the pre-set upper limit vehicle speed Vh that corresponds to the gear stage established when the second condition determination unit 86 is executed. Specifically, the second condition determination unit 86 reads out, from the vehicle speed storage unit 82, the upper limit vehicle speed Vh that corresponds to the gear stage established when the second condition determination unit 86 is executed, and determines whether the vehicle speed V is less than the upper limit vehicle speed Vh that was read out from the vehicle speed storage unit 82.

The second notification unit 87 is a functional unit that notifies the outside of the determination result of the second condition determination unit 86. Here, the second notification unit 87 corresponds to the second notification means recited in the claims.

Specifically, if the second condition determination unit 86 determined that the "second stop condition" is not satisfied, the second notification unit 87 displays characters, a graphic, an image, or the like that indicates that the operation for stopping the engine 1 will not be executed in order to avoid a decrease in the lifetime of the manual transmission 2, for example. More specifically, the second notification unit 87 indicates that even if the "stop instruction operation" is performed, the operation for stopping the engine 1 will not be executed in order to avoid a decrease in the lifetime of the manual transmission 2, by extinguishing the engine stop permission lamp 91 disposed in the combination meter 9.

In this way, if it was determined that the "second stop condition" is not satisfied, the outside is notified that the operation for stopping the engine 1 will not be executed since the "second stop condition" is not satisfied, and therefore the driver can be aware that the reason why the operation for stopping the engine 1 will not be executed even if the "stop instruction operation" is performed is that the "second stop condition" is not satisfied, thus making it possible to improve usability.

Although the case where the second notification unit 87 extinguishes the engine stop permission lamp 91 when it was determined that the "second stop condition" is not satisfied is described in the present embodiment, a mode is possible in which if it was determined that the "second stop condition" is not satisfied, the second notification unit 87 outputs audio indicating that the operation for stopping the engine 1 will not be executed even if the "stop instruction operation" is performed, since the "second stop condition" is not satisfied (e.g., a pre-set warning sound or the audio phrase "The engine will not be stopped since conditions are not satisfied"), and a mode is possible in which characters, an image, or the like indicating that the operation for stopping the engine 1 will not be executed since the "second stop condition" is not satisfied is displayed.

Also, if the second condition determination unit 86 determined that the "second stop condition" is satisfied, the second notification unit 87 displays characters, a graphic, an image, or the like that prompts the "stop instruction operation" for the execution of the operation for stopping the engine 1, for example. More specifically, the second notification unit 87 lights the engine stop permission lamp 91 that is disposed in the combination meter 9 in order to prompt the "stop instruction operation" for execution of the operation for stopping the engine 1.

In this way, it is determined whether a pre-set "second stop condition", which is a condition for avoiding a decrease in the lifetime of the manual transmission 2, is satisfied if it was determined that the "stop instruction operation" has not been performed. That determination result is then notified to the outside, and therefore the driver can be aware of whether or not the operation for stopping the engine 1 can be executed by performing the "stop instruction operation", thus making it possible to appropriately prevent needless execution of the "stop instruction operation".

Specifically, if it was determined that the "second stop condition" is not satisfied, even if the "stop instruction operation" is performed thereafter, that "stop instruction operation" will be a needless operation since it is determined that the "first stop condition" is not satisfied and the operation for stopping the engine 1 will not be executed. Accordingly, since the result of the determination of whether the "second stop condition" is satisfied is notified to the outside, the driver can be aware of whether the operation for stopping the engine 1 can be executed by performing the "stop instruction operation", thus making it possible to appropriately prevent the needless execution of the "stop instruction operation".

Also, if it was determined that the "second stop condition" is satisfied, characters, a graphic, an image, or the like are displayed to prompt the "stop instruction operation" for the execution of the operation for stopping the engine 1, for example, and thus the driver can improve fuel efficiency by performing the "stop instruction operation" so as to execute the operation for stopping the engine 1.

Furthermore, since the "second stop condition" is the condition that the vehicle speed V is less than the pre-set upper limit vehicle speed Vh that corresponds to the gear stage established when the determination is executed by the second condition determination unit 86, it is possible to more appropriately prevent the needless execution of the stop instruction operation.

Specifically, since the "second stop condition" is the condition that the vehicle speed V is less than the pre-set upper limit vehicle speed Vh that corresponds to the gear stage established when the determination is executed by the second condition determination unit 86, the result of this determination of whether the "second stop condition" is satisfied is approximately the same as the result of the determination of whether the "first stop condition" is satisfied. Accordingly, since the result of the determination of whether the "second stop condition" is satisfied is notified to the outside, the driver can be aware of whether the operation for stopping the engine 1 can be executed by performing the "stop instruction operation", thus making it possible to more appropriately prevent the needless execution of the "stop instruction operation".

Although the present embodiment describes the case where the "second stop condition" is the condition that the vehicle speed V is less than the pre-set upper limit vehicle speed Vh that corresponds to the gear stage established when the determination is executed by the second condition determination unit 86, the "second stop condition" needs only be a condition for avoiding a decrease in the lifetime of the manual transmission 2. For example, a mode is possible in which the "second stop condition" is the condition that the output shaft rotational speed No of the manual transmission 2 is less than a pre-set upper limit rotational speed Nh. In this case, whether the "second stop condition" is satisfied can be determined through simple processing.

### - Operations of engine control device 100 (ECU 8) -

Next is a description of operations performed by the engine control device 100 (mainly the ECU 8) of the present invention with reference to FIG. 10. FIG. 10 is a flowchart showing an example of operations performed by the engine control device 100 (mainly the ECU 8) shown in FIG. 7. First, in step S101, the operation determination unit 81 determines via the axle rotational speed sensor 431 whether the vehicle is traveling. In the case of YES in step S101, the processing moves to step S103. In the case of NO in step S101, the processing enters a standby state.

In step S103, the first condition determination unit 83 detects the gear stage of the manual transmission 2 via the shift position sensor 502, and stores information indicating the detected gear stage in the RAM or the like. Then in step S105, the operation determination unit 81 performs "operation determination processing", which is processing for determining whether the "stop instruction operation" was performed while the vehicle is traveling. Note that details of the "operation determination processing" will be described later with reference to FIG. 11.

Subsequently, in step S107, the first condition determination unit 83 determines whether the "stop instruction operation" was performed based on the result of the determination in step S105. In the case of YES in step S107, the processing moves to step S109. In the case of NO in step S107, the processing moves to step S121. In step S109, the first condition determination unit 83 performs "first condition determination processing", which is processing for determining whether the "first stop condition" is satisfied. Note that details of the "first condition determination processing" will be described later with reference to FIG. 12.

Next, in step S111, the control execution unit 84 determines whether the "first stop condition" is satisfied based on the result of the determination in step S109. In the case of YES in step S111, the processing moves to step S113. In the case of NO in step S111, the processing moves to step S115.

In step S113, the control execution unit 84 executes the operation for stopping the engine 1. Then in step S117, the control execution unit 84 determines whether the clutch 3 is in the disengaged state (OFF). In the case of YES in step S117, the processing moves to step S119. In the case of NO in step S117, the processing enters a standby state.

In step S115, the first notification unit 85 blinks the engine stop permission lamp 91 to indicate that the operation for stopping the engine 1 will not be executed since the "first stop condition" is not satisfied. The processing then returns to step S101, and processing from step S101 onward is executed again.

In step S119, the control execution unit 84 executes the operation for restarting the engine 1. The processing then returns to step S101, and processing from step S101 onward is executed again.

In step S121, the second condition determination unit 86 performs "second condition determination processing", which is processing for determining whether the "second stop condition" is satisfied. Note that details of the "second condition determination processing" will be described later with reference to FIG. 13.

Next, in step S123, the second notification unit 87 determines whether the "first stop condition" is satisfied based on the result of the determination in step S121. In the case of YES in step S123, the processing moves to step S125. In the case of NO in step S123, the processing moves to step S127.

In step S125, the second notification unit 87 lights the engine stop permission lamp 91 to prompt the "stop instruction operation". The processing then returns to step S101, and processing from step S101 onward is executed again.

In step S127, the second notification unit 87 extinguishes the engine stop permission lamp 91 to indicate that the "second stop condition" is not satisfied. The processing then returns to step S101, and processing from step S101 onward is executed again.

In this way, it is determined whether the "stop instruction operation", which is a pre-set operation for instructing the stopping of the engine 1, was performed while the vehicle is traveling (step S105). Then, if it was determined that the "stop instruction operation" was performed, it is determined whether the pre-set "first stop condition", which is a condition for avoiding a decrease in the lifetime of the manual transmission 2, is satisfied (step S109). Furthermore, since the operation for stopping the engine 1 is executed (step S113) only if it was determined that the "first stop condition" is satisfied, it is possible to prevent a decrease in the lifetime of the synchromesh mechanisms 24A, 24B, and 24C (see FIG. 4), and the like by setting the "first stop condition" to an appropriate condition.

### - Operation determination processing -

FIG. 11 is a detailed flowchart showing an example of the "operation determination processing" executed in step S105 of the flowchart shown in FIG. 10. The following describes operations performed by the ECU 8 in the "operation determination processing" with reference to FIG. 11. Note that all of the following processing is executed by the operation determination unit 81. First, in step S201, it is determined whether an operation for putting the clutch 3 in the disengaged state (OFF) was performed. In the case of YES in step S201, the processing moves to step S203. In the case of NO in step S201, the processing moves to step S213.

In step S203, it is determined whether an operation for setting the gear stage of the manual transmission 2 to neutral (N) was performed. In the case of YES in step S203, the processing moves to step S207. In the case of NO in step S203, the processing moves to step S205. In step S205, it is determined whether a pre-set time period T1 (e.g., 5 sec) has elapsed from when it was determined in step S201 that an operation for putting the clutch 3 in the disengaged state (OFF) was performed. In the case of YES in step S205, the processing moves to step S213. In the case of NO in step S205, the processing returns to step S203, and processing from step S203 onward is executed again.

In step S207, it is determined whether an operation for putting the clutch 3 in the engaged state (ON) was performed. In the case of YES in step S207, the processing moves to step S211. In the case of NO in step S207, the processing moves to step S209. In step S209, it is determined whether a pre-set time period T2 (e.g., 5 sec) has elapsed from when it was determined in step S203 that an operation for setting the gear stage of the manual transmission 2 to neutral (N) was performed. In the case of YES in step S209, the processing moves to step S213. In the case of NO in step S209, the processing returns to step S207, and processing from step S207 onward is executed again.

In step S211, it is determined that the "stop instruction operation" was performed, and then the processing returns to step S107 in the flowchart in FIG. 10. In step S213, it is determined that the "stop instruction operation" has not been performed, and then the processing returns to step S107 in the flowchart in FIG. 10.

### - First stop condition determination processing -

FIG. 12 is a detailed flowchart showing an example of the "first stop condition determination processing" executed in step S109 of the flowchart shown in FIG. 10. The following describes operations performed by the ECU 8 in the "first stop condition determination processing" with reference to FIG. 12. Note that all of the following processing is executed by the first condition determination unit 83. First, in step S301, the information indicating the gear stage that was stored in step S103 of the flowchart shown in FIG. 10 is read out. Then in step S303, information on the upper limit vehicle speed Vh that corresponds to the gear stage that was read out in step S301 is read out from the vehicle speed storage unit 82.

Next, in step S305, the vehicle speed V is detected via the axle rotational speed sensor 431. Then in step S307, it is determined whether the vehicle speed V that was detected in step S305 is less than the upper limit vehicle speed Vh that was read out in step S303. In the case of YES in step S307, the processing moves to step S309. In the case of NO in step S307, the processing moves to step S311.

In step S309, it is determined that the "first stop condition" is satisfied, and the processing returns to step S111 in the flowchart shown in FIG. 10. In step S311, it is determined that the "first stop condition" is not satisfied, and the processing returns to step S111 in the flowchart shown in FIG. 10.

### - Second stop condition determination processing -

FIG. 13 is a detailed flowchart showing an example of the "second stop condition determination processing" executed in step S121 of the flowchart shown in FIG. 10. The following describes operations performed by the ECU 8 in the "second stop condition determination processing" with reference to FIG. 13. Note that all of the following processing is executed by the second condition determination unit 86. First, in step S401, the gear stage is detected via the shift position sensor 502. Then in step S403, information on the upper limit vehicle speed Vh that corresponds to the gear stage that was detected in step S401 is read out from the vehicle speed storage unit 82.

Next, in step S405, the vehicle speed V is detected via the axle rotational speed sensor 431. Then in step S407, it is determined whether the vehicle speed V that was detected in step S405 is less than the upper limit vehicle speed Vh that was read out in step S403. In the case of YES in step S407, the processing moves to step S409. In the case of NO in step S407, the processing moves to step S411.

In step S409, it is determined that the "second stop condition" is satisfied, and the processing returns to step S123 in the flowchart shown in FIG. 10. In step S411, it is determined that the "second stop condition" is not satisfied, and the processing returns to step S123 in the flowchart shown in FIG. 10.

### - Other Embodiments -

Although the above embodiment describes the case where the ECU 8 functions as the operation determination unit 81, the vehicle speed storage unit 82, the first condition determination unit 83, the control execution unit 84, the first notification unit 85, the second condition determination unit 86, and the second notification unit 87, a mode is possible in which at least one of the operation determination unit 81, the vehicle speed storage unit 82, the first condition determination unit 83, the control execution unit 84, the first notification unit 85, the second condition determination unit 86, and the second notification unit 87 is configured by hardware such as an electronic circuit.

Although the case where the shift position selected by the shift lever 501 is detected by the shift position sensor 502 is described in the above embodiment, a mode is possible in which the shift position selected by the shift lever 501 is estimated based on the input shaft rotational speed Ni and the output shaft rotational speed No. In this case, there is no need for the provision of the shift position sensor 502.

Although the case where the clutch 3 is operated based on the amount that the clutch pedal 7 is pressed is described in the above embodiment, a mode is possible in which the clutch 3 is a so-called automatic clutch (automatic manual transmission: AMT). In this case, it is preferable that the "stop instruction operation" is an operation for setting the gear stage of the manual transmission 2 to neutral (N).

Although the case where the ECU 8 of the present invention has the function configuration shown in FIG. 7 and performs the operations in the flowchart shown in FIG. 10 is described in the above embodiment, a mode is possible in which the ECU 8 has another functional configuration and performs other operations. For example, a mode is possible in which the ECU 8 of the present invention performs operations in the flowchart shown in FIG. 14.

FIG. 14 is a flowchart showing another example of operations performed by the engine control device 100 shown in FIG. 7. The following describes differences between the flowchart shown in FIG. 14 and the flowchart shown in FIG. 10. In the flowchart shown in FIG. 10, if it is determined in the operation determination processing of step S105 that the "stop instruction operation" has not been performed, the "second stop condition determination processing" is executed in step S121, and the processing of steps S121 to S127 is performed. In contrast, in the flowchart shown in FIG. 14, if it was determined in the operation determination processing of step S505 that the "stop instruction operation" has not been performed, the processing returns to step S501. In this case, among the functional units of the ECU 8 shown in FIG. 7, the second condition determination unit 86 and the second notification unit 87 are not necessary, and the configuration of the engine control device 100 is simplified.

### [Industrial Applicability]

The present invention is applicable to an engine control device in a vehicle in which an engine, a manual transmission, and a clutch provided between the engine and the manual transmission are mounted, the clutch being configured so as to be able to switch between a disengaged state and an engaged state, and the engine control device controlling an operation for stopping the engine while the vehicle is traveling.

### [Reference Signs List]

- 1: Engine
- 100: Engine control device
- 102: Injector
- 104: Igniter
- 106: Throttle motor
- 124: Engine speed sensor
- 2: Manual transmission
- 21: Input shaft
- 218: Input shaft rotational speed sensor
- 22: Output shaft
- 24A, 24B, 24C, 24D: Shift synchromesh mechanism
- 251: Neutral sensor
- 252: Shift stroke sensor
- 253: Select stroke sensor
- 3: Clutch
- 30: Friction clutch
- 411: Output shaft rotational speed sensor
- 431: Axle rotational speed sensor
- 5: Shift device
- 502: Shift position sensor
- 6: Accelerator pedal
- 61: Accelerator opening degree sensor
- 7: Clutch pedal
- 71: Clutch stroke sensor
- 8: ECU (part of engine control device)
- 81: Operation determination unit (operation determination means)
- 82: Vehicle speed storage unit (part of first condition determination means, part of second condition determination means)
- 83: First condition determination unit (part of first condition determination means)
- 84: Control execution unit (control execution means)
- 85: First notification unit (first notification means)
- 86: Second condition determination unit (part of second condition determination means)
- 87: Second notification unit (second notification means)
- 9: Combination meter (display unit: part of engine control device)
- 91: Engine stop permission lamp

## Claims

1. An engine control device in a vehicle in which an engine, a manual transmission, and a clutch provided between the engine and the manual transmission are mounted, the clutch being configured so as to be able to switch between a disengaged state and an engaged state, and the engine control device controlling an operation for stopping the engine while the vehicle is traveling, the engine control device comprising:
an operation determination means for determining whether a stop instruction operation that is a pre-set operation for instructing stopping of the engine was performed while the vehicle is traveling;
a first condition determination means for, if the operation determination means determined that the stop instruction operation was performed, determining whether a pre-set first stop condition that is a condition for avoiding a decrease in the lifetime of the manual transmission is satisfied; and
a control execution means for executing the operation for stopping the engine only if the first condition determination means determined that the first stop condition is satisfied.

2. The engine control device according to claim 1, wherein the stop instruction operation includes at least an operation for setting a gear stage of the manual transmission to neutral.

3. The engine control device according to claim 2, wherein the stop instruction operation is an operation involving sequential performance of an operation for putting the clutch in the disengaged state, an operation for setting the gear stage of the manual transmission to neutral, and an operation for putting the clutch in the engaged state.

4. The engine control device according to claim 2 or 3, wherein the first stop condition is a condition that a vehicle speed is less than a pre-set upper limit vehicle speed that corresponds to the gear stage that was established before the stop instruction operation was performed.

5. The engine control device according to any one of claims 1 to 3, wherein the first stop condition is a condition that an output shaft rotational speed of the manual transmission is less than a pre-set upper limit rotational speed.

6. The engine control device according to any one of claims 1 to 5, further comprising a first notification means for, if the first condition determination means determined that the first stop condition is not satisfied, notifying the outside that the operation for stopping the engine will not be executed since the first stop condition is not satisfied.

7. The engine control device according to any one of claims 1 to 6, further comprising:
a second condition determination means for, if the operation determination means determined that the stop instruction operation has not been performed, determining whether a pre-set second stop condition that is a condition for avoiding a decrease in the lifetime of the manual transmission is satisfied; and
a second notification means for notifying the outside of the determination result obtained by the second condition determination means.

8. The engine control device according to claim 7, wherein the second stop condition is a condition that the vehicle speed is less than a pre-set upper limit vehicle speed that corresponds to the gear stage established when the determination is made by the second condition determination.

9. The engine control device according to claim 7, wherein the second stop condition is a condition that an output shaft rotational speed of the manual transmission is less than a pre-set upper limit rotational speed.

10. The engine control device according to any one of claims 7 to 9, wherein if the second condition determination means determined that the second stop condition is not satisfied, the second notification means notifies the outside that the operation for stopping the engine will not be executed even if the stop instruction operation is performed.
